# EUROPEAN PATENT SPECIFICATION

(11) **EP 1 549 417 B1**
(45) Date of publication and mention of the grant of the patent: **27.07.2011**
(21) Application number: 03753189.4
(22) Date of filing: 01.10.2003
(51) Int. Cl.: B01D 53/60

(54) **FLUE GAS PURIFICATION METHOD**
VERFAHREN ZUR REINIGUNG VON ABGASEN
PROCEDE DE PURIFICATION DE GAZ DE COMBUSTION

(30) Priority: 01.10.2002 US 260465
(43) Date of publication of application: 06.07.2005
(73) Proprietor: Airborne Clean Energy LLC, Terrace Park, Ohio 45174 (US)
(72) Inventor: MORTSON, Murray, Calgary, Alberta T2H 1J5 (CA); BICHEL, Joe, Calgary, Alberta T2H 1J5 (CA); SCHAAF, Stephen, Calgary, Alberta T2H 1J5 (CA); JOHNSON, Dennis, Calgary, Alberta T2H 1J5 (CA)
(74) Representative: Gaunt, Robert John
(86) International application number: PCT/CA2003/001508
(87) International publication number: WO 2004/030797

(56) References cited:
- DE-A- 3 501 118
- US-A- 4 442 079
- US-A- 4 645 653
- US-A- 4 908 194
- US-A- 4 908 195
- PATENT ABSTRACTS OF JAPAN vol. 1995, no. 08, 29 September 1995 (1995-09-29) & JP 07 116465 A (CHUBU ELECTRIC POWER CO INC;OTHERS: 01), 9 May 1995 (1995-05-09)
- PATENT ABSTRACTS OF JAPAN vol. 017, no. 533 (C-1114), 27 September 1993 (1993-09-27) & JP 05 146636 A (HOKKAIDO ELECTRIC POWER CO INC:THE;OTHERS: 01), 15 June 1993 (1993-06-15)

## Description

### TECHNICAL FIELD

The present invention relates to a flue gas purification method, and more particularly, the present invention relates to a flue gas purification method incorporating dry injection and wet scrubbing unit operations to substantially eliminate SOₓ and NOₓ compounds as well as other air toxic compounds from the flue gas.

### BACKGROUND ART

In view of new stringent legislation in the United States and elsewhere, greater strides have now had to be made concerning fossil fuels. As is well known, the use of fossil fuels significantly contributes to air pollution and a multitude of patents have issued with the objective of mitigating the pollution aspect.

Globally, the prior art establishes a number of wet chemical absorption methods which primarily incorporate wet scrubbers where a hot contaminated gas is scrubbed or detoxified in a gas liquid contact apparatus with a neutralizing solution. The neutralizing solution can typically be any suitable aqueous alkaline liquid or slurry to remove sulfur oxides and other contaminants present in the flue gas stream. The gas liquid contacts apparatus are generally employed by power generating stations and use the wet chemical absorption arrangement incorporating sodium, calcium, magnesium, etc. to desulfurize flue gas.

Johnson et al., in United States Patent No. 6,303,083, issued October 16, 2001, disclose a SOₓ removal process for flue gas treatment. A specific particle size range for the sorbent is reacted with the flue gas to reduce SO₃ content. The treated flue gas is then reacted in a wet scrubber to reduce SO₂ content.

Further processes which have been incorporated in industry to remove sulfur trioxide include condensation reactions. An example of such a process is referred to as the WSA-SNOX process. This method involves the catalytic conversion of sulfur dioxide to sulfur trioxide. The sulfur trioxide is then removed by condensation in the form of sulfur acid.

As is evident from the existing flue gas management protocols, NO and NOₓ formation present complications in terms of plume control. Consequently, the existence of the plume requires additional unit operations and still results in the existence of the plume at tolerable levels.

The wet scrubbing systems that employ lime, lime stone, soda ash or other alkaline compositions demonstrate efficacy for removal of sulfur dioxide, but are significantly less efficient at the removal of sulfur trioxide or sulfuric acid aerosol.

In light of the increasing stringent pollution regulations, there clearly exists a need for the management of flue gas where both the SOₓ and NOₓ compounds can be handled effectively without emission of brown plume, the need to augment with suppressants or the combination of equipment which, in the case of the wet flue gas desulfurization and wet electrostatic precipitation, only marginally addresses the problem at a fairly significant expense.

The methodology set forth herein alleviates all of the limitations in the prior art techniques.

### DISCLOSURE OF THE INVENTION

The object of the present invention is to provide an improved method for flue gas purification.

According to the present invention there is provided a method of scrubbing SOₓ and NOₓ compounds from a flue gas stream, characterized in that the method comprises: a dry injection scrubbing operation, a wet scrubbing operation and an oxidation operation, said dry injection scrubbing operation including: contacting a flue gas stream containing SOₓ and NOₓ compounds with a sorbent selected from the group consisting of sodium bicarbonate, sodium carbonate, sodium hydroxide, and combinations thereof, for removing substantially all of the SOₓ and a large amount of NOₓ compounds present in said stream; said wet scrubbing operation including: scrubbing said stream from said dry injection scrubbing operation; and said oxidation operation including: adding an oxidant to said stream subsequent to said wet scrubbing operation, the wet scrubbing operation and the oxidation operation removing any residual SOₓ and NOₓ compounds remaining in said stream. Suitable oxidants include hydrogen peroxide , ozone, NaClOₓ, where x is 1 through 4, or a combination thereof. Optionally, the method of this invention further includes the step of recirculating unreacted sorbent to said wet scrubbing operation. With the method of this invention, typically said stream from said dry injection scrubbing process produces sodium sulfate, sodium sulfite, sodium fluoride, sodium chloride, sodium nitrite, sodium carbonate and/or sodium nitrate.

The unification of the dry injection scrubbing operation and a wet scrubbing operation advantageously eliminates the concern for brown plume. Previously, reaction of the sodium sorbents resulted in the synthesis of NOₓ compounds as plume. The NOₓ compounds are soluble species and are easily managed by treatment with the wet scrubbing operation. In this manner, it is immaterial that According to the present invention there is provided a method of scrubbing SOₓ and NOₓ compounds from a flue gas stream, characterized in that the method comprises:
a dry injection scrubbing operation, a wet scrubbing operation and an oxidation operation,
said dry injection scrubbing operation including:
   contacting a flue gas stream containing SOₓ and NOₓ compounds with a sorbent selected from the group consisting of sodium bicarbonate, sodium carbonate, sodium hydroxide, and combinations thereof, for removing substantially all of the SOₓ and a large amount of NOₓ compounds present in said stream;
said wet scrubbing operation including:
   scrubbing said stream from said dry injection scrubbing operation; and
said oxidation operation including:
   adding an oxidant to said stream subsequent to said wet scrubbing operation,
   the wet scrubbing operation and the oxidation operation removing any residual SOₓ and NOₓ compounds remaining in said stream.
Suitable oxidants include hydrogen peroxide , ozone, NaClOₓ, where x is 1 through 4, or a combination thereof. Optionally, the method of this invention further includes the step of recirculating unreacted sorbent to said wet scrubbing operation. With the method of this invention, typically said stream from said dry injection scrubbing process produces sodium sulfate, sodium sulfite, sodium fluoride, sodium chloride, sodium nitrite, sodium carbonate and/or sodium nitrate. NO₂ forms; the plume cannot develop since the NOₓ and NₓO_{y} (where x=>1 and Y=>2) species are absorbed in the wet scrubber. Accordingly, the previous requirement for auxiliary suppressant addition is obviated.

In the combined system set forth herein, the flue gas is preconditioned by absorbent injection. Advantageously, this can be achieved by wet or dry injection with the sorbent or combinations of sorbent and at any possible location in the system. Dry sodium bicarbonate injection has been found to be particularly effective since it reacts with the sulfur di- and trioxides as well as the NOₓ compounds. Generally speaking, the sulfur trioxide is managed to a level that is compatible with single stage wet electrostatic precipitators installed in a wet flue gas desulfurization tower.

As a particular benefit, the processes set forth herein are useful to capture air toxics including, as examples, mercury, particulates and a host of heavy metals.

As set forth herein previously, prior art attempts relating to the conversion of NO₂ were problematic since a brown plume of NO₂ was not captured by downstream equipment. By the combination of the technology set forth herein, the wet scrubbing operation efficiently captures the NO₂, N₂O₃ and N₂O₅ and other NₓO_{y} compounds. In addition, at least a portion of the NO is captured by the sodium bicarbonate.

The provision of the oxidant augments the effectiveness of the wet scrubbing and in particular, the oxidation of the NOₓ compounds.

### BRIEF DESCRIPTION OF THE DRAWINGS

Figure 1 is a schematic illustration of a vertical combustor facility used to generate test data; and
Figure 2 is a schematic illustration of the process according to one embodiment.

It will be noted that throughout the appended drawings, like features are identified by like reference numerals.

### BEST MODE FOR CARRYING OUT THE INVENTION

### EXPERIMENTAL

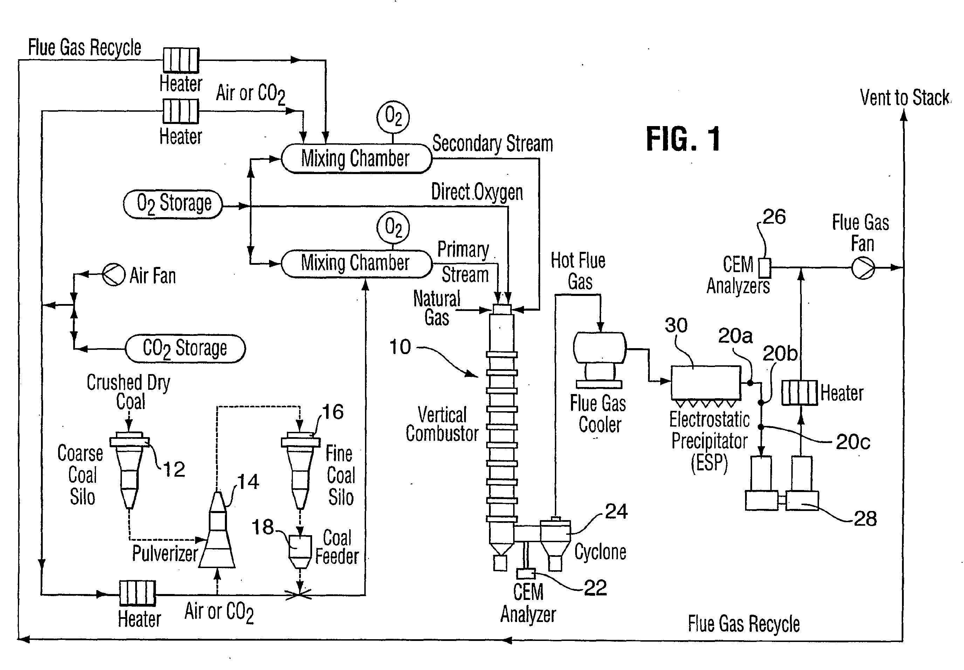

The apparatus employed to gather the data is illustrated in Figure 1. The vertical combustor, globally denoted by numeral 10, was the primary combustor for generating the data.

Bituminous coal from silo 12 was pulverized in pulverizer 14 and passed on to silo 16 and subsequently into coal feeder 18. Pre-dried and pulverized coal was conveyed to the combustor via an eductor 20.

The combustor 10 produced NOₓ emissions of about 400 - 500 ppmdv at 2% O₂ excess at the combustor exit and SOₓ emissions at 2700 to 3000 ppm.

Flue gas compositions (O₂, CO₂, CO, NO and NO₂) were monitored using flue gas analyzer 22 located between the combustor 10 and cyclone 24.

For emission control, the combustor 10 was equipped with a hot cyclone, a five-field electrostatic precipitator (ESP) 30 and the condensing heat exchanger 28 (used as a wet scrubber).

Dry NaHCO₃ powder was injected against the flue stream in a counter current manner in ports 20a, 20b, and 20c.

Table 1 sets forward the conditions under which the data was obtained.

| **Table 1 - Conditions Common to All Tests** | | | | |
|---|---|---|---|---|
| Coal | | | Bituminous | |
| Heat input | | | 0.21 MWth (0.7 MBTU/hr) | |
| Target O₂ excess in flue gas | | | 2% volume dry | |
| Target NOₓ concentration | | | 400 ppmdv | |
| Flue gas velocity at 150 °C | | | - 3.4 m/s (11 ft/sec) | |
| Scrubbing solution flow rate | | | - 34 1/min (9 USGPM) | |
| NaHC03 injection duration | | | 1 hour, | |
| NaHCO₃ in-flight residence time | | | 0.5, 1.5 and 3 sec | |
| NaHCO₃ injection temperature | | | 150°C | |

| **Conditions Specific to Each Test** | | | | |
|---|---|---|---|---|
| Test ID | NaHCO₃ Injection Rate | NaHCO₃ Size | | Scrubbing Solution |
| _0 | 6.6 kg/hr | 45 µm | | Na₂CO₃ |
| _1 | 6.6 kg/hr | 20 µm | | Pre-charged |
| _2 | 5.5 kg/hr | 20 µm | | Pre-charged |
| _3 | 7.7 kg/hr | 20 µm | | Pre-charged |

| **Injection Port** | | | | |
|---|---|---|---|---|
| Port ID | Residence time from Port to inlet (sec) | | | |
| 20a | 3 | | | |
| 20b | 1.5 | | | |
| 20c | 0.5 | | | |

Test _0 was a base test to ensure that all components were operational. In this test, the NaHCO₃ was first injected in each port for 5 min. Then, a 1-hour long injection was done in Port 20a.

The scrubber pre-charging was done according to the following specifications: 1 kg of Na₂CO₃, 29 kg of Na₂SO₄ and 19 kg of Na₂SO₃ dissolved in 187 l of water. The pH of the prepared solution was about 10.6.

Table 2 represents the analysis of the coal used.

| **Table 2 - Coal analysis** | |
|---|---|
| **Proximate Analysis (wt %)** | |
| Moisture | 1.14 |
| Ash | 11.03 |
| Volatiles | 39.3 |
| Fixed Carbon | 48.53 |

| **Ultimate Analysis (wt %, dry)** | |
|---|---|
| Carbon | 72.42 |
| Hydrogen | 4.99 |
| Nitrogen | 1.37 |
| Sulphur | 3.96 |
| Ash | 11.03 |
| Oxygen (diff) | 6.10 |
| Chlorine (Cl) | 790 ppm |
| Fluorine (F) | 72 ppm |
| Mercury (Hg) | 0.086 ppm |

All combustion trials were conducted at a firing rate of 0.21 MWt (0.7 MBTU/hr) with the O₂ in flue gas being maintained at 2 % dv.

Prior to commencing each suite of combustion trials with a specific coal, natural gas was burned at 0.3 MWt for at least 8h with 5 vol% O₂ in the flue gas to perform instrumentation checks and to attain thermal equilibrium in the combustor 10 and downstream heat exchanger 28.

### EXAMPLE 1

NaHCO₃ was injected at 150°C for a short period (5 minutes) in all three ports 20a, 20b, 20c at a rate of 6.6 kg/hr to observe its effects on the concentrations of SO₂ and NOₓ. A 1-hour continuous injection was then performed in Port 20a following the short injections.

Sodium carbonate (Na₂CO₃) in water solution was used in scrubber 28 as the scrubbing solution and was added during the testing period to maintain the solution pH at around 7.

Table 3 summarizes the average flue gas compositions at the combustor exit and scrubber inlet before any NaHCO₃ injection was made.

| **Table 3 - Flue gas compositions before injections** | | |
|---|---|---|
| | **Combustor Exit** | **Scrubber inlet** |
| **O₂ (%)** | 2.08 ± 0.32 | 5.41 ± 0.22 |
| **CO₂ (%)** | 16.21 ± 0.38 | 13.65 ± 0.26 |
| **CO (ppm)** | 50 ± 154 | 100 ± 142 |
| **NOₓ (ppm)** | 493 ± 54 | 226 ± 24 |
| **SO₂ (ppm)** | 2854 ± 114 | 2331 ± 58 |

Note that all concentrations are reported on a volumetric and dry basis.

Injection of sodium bicarbonate started at 0240 pm at Port 20c (0.5 sec residence time)., then proceeded to Ports '20b and 20a lasting for 5 min at each port. Table 4 summarizes the flue gas compositions during the injection period.

| **Table 4 - Flue gas compositions at combustor exit and scrubber inlet during the short period (5 min) sorbent injections** | | | | | | |
|---|---|---|---|---|---|---|
| | **Port 20c** | | **Port 20b** | | **Port 20a** | |
| | **Comb. Exit** | **Scrubber inlet** | **Comb. Exit** | **Scrubber inlet** | **Comb. Exit** | **Scrubber inlet** |
| **O₂ (%)** | 2.6 ± 0.4 | 7.2 ± 0.5 | 2.3 ± 0.3 | 7.1 ± 0.3 | 2.3 ± 0.2 | 6.9 ± 0.1 |
| **CO₂ (%)** | 15.6 ± 0.4 | 11.9 ± 0.3 | 16.3 ± 0.3 | 12.0 ± 0.2 | 16.1 ± 0.0 | 12.4 ± 0.0 |
| **CO (ppm)** | 35 ± 30 | 67 ± 78 | 15 ± 26 | 28 ± 24 | 8 ± 3 | 19 ± 9 |
| **NOₓ (ppm)** | 491 ± 13 | 204 ± 11 | 488 ± 13 | 193 ± 13 | 512 ± 10 | 162 ± 7 |
| **SO₂ (ppm)** | 2687 ± 96 | 1637 ± 117 | 2853 ± 30 | 1570 ± 97 | 2919 ± 57 | 1344 ± 44 |

Table 5 shows the flue gas compositions during the 1-hour injection in Port 20a:

| **Table 5 - Flue gas compositions at combustor exit, scrubber inlet and outlet during the 1-hour sorbent injections in Port 20a** | | | |
|---|---|---|---|
| | **Comb. Exit** | **Scrubber Inlet** | **Scrubber Outlet** |
| **O₂ (%)** | 2.3 ± 0.2 | 6.9 ± 0.1 | 7.0 ± 0.3 |
| **CO₂ (%)** | 16.1 ± 0.3 | 12.3 ± 0.2 | 12.4. ± 0.2 |
| **CO (ppm)** | 30 ± 107 | 36 ± 80 | 10 ± 1 |
| **NOₓ (ppm)** | 515 ± 19 | 152 ± 11 | 170 ± 7 |
| **SO₂ (ppm)** | 2862 ± 42 | 1115 ± 45 | 15 ± 2 |

A significant reduction in concentration of the SO₂ and NOₓ was realized immediately upon injection of the NaHCO₃ into the flue gas stream. The effect was enhanced with increasing residence time. Once the NaHCO₃ injection was complete, the concentrations of SO₂ and NOₓ returned to pre-injection levels.

A further test was done with NaHCO₃ injection in three ports at a flow rate of 6.6 kg/hr and target injection temperature of 150°C. The injection period lasted 1 hour in each port.

The NaHCO₃ injection started in Port 20c and proceeded to Ports 20b and 20a.

Table 6 summarizes the average flue gas compositions at the combustor exit and scrubber inlet before any NaHCO₃ injection was made.

| **Table 6 - Flue gas compositions before injections** | | |
|---|---|---|
| | **Combustor Exit** | **Scrubber inlet** |
| **O₂ (%)** | 1.87 ± 0.44 | 4.48 ± 0.49 |
| **CO₂ (%)** | 16.42 ± 0.42 | 14.11 ± 0.41 |
| **CO (ppm)** | 27 ± 109 | 46 ± 56 |
| **NOₓ (ppm)** | 492 ± 47 | 408 ± 36 |
| **SO₂ (ppm)** | 2969 ± 68 | 2591 ± 157 |

Injection of NaHCO₃ started at 1254 am at Port 20c (0.5 sec residence time), proceeded to Ports 20b and 20a and lasted for 60 min in each port. Table 7 summarizes the flue gas compositions during the injections.

| **Table 7 - Flue gas compositions during injections** | | | |
|---|---|---|---|
| **Port 20c** | | | |
| | Scrubber inlet before injection (diluted by injection air) | Scrubber inlet during injection | Scrubber outlet during injection |
| **O₂ (%)** | 6.10 ± 0.47 | 5.68 ± 0.18 | 5.66 ± 0.12 |
| **CO₂ (%)** | 13.35 ± 0.44 | 13.41 ± 0.28 | 13.37 ± 0.09 |
| **CO (ppm)** | 45 ± 47 | 97 ± 142 | 36 ± 44 |
| **NO (ppm)** | 356 ± 18 | 215 ± 13 | 252 ± 13 |
| **NO₂ (ppm)** | 6 ± 2 | 27 ± 4 | ± 2 |
| **NOₓ (ppm)** | 362 ± 21 | 242 ± 12 | 256 ± 15 |
| **SO₂ (ppm)** | 2385 ± 64 | 296 ± 30 | 11 ± 2 |

| **Port 20b** | | | |
|---|---|---|---|
| | Scrubber inlet before injection (diluted by injection air) | Scrubber inlet during injection | Scrubber outlet during injection |
| **O₂ (%)** | 5.71 ± 0.45 | 5.67 ± 0.14 | 5.68 ± 0.17 |
| **CO₂ (%)** | 13.46 ± 0.48 | 13.67 ± 0.00 | 13.50 ± 0.00 |
| **CO (ppm)** | 43 ± 45 | 43 ± 71 | 23 ± 23 |
| **NO (ppm)** | 317 ± 24 | 182 ± '13 | 202 ± 13 |
| **NO₂ (ppm)** | 8 ± 2 | 41 ± 3 | 6 ± 4 |
| **NOₓ (ppm)** | 325 ± 24 | 223 ± 12 | 208 ± 13 |
| **SO₂ (ppm)** | 2167 ± 204 | 245 ± 34 | 18 ± 4 |

| **Port 20a** | | | |
|---|---|---|---|
| | Scrubber inlet before injection (diluted by injection air) | Scrubber inlet during injection | Scrubber outlet during injection |
| **O₂ (%)** | 5.96 ± 0.05 | 5.74 ± 0.12 | 5.80 ± 0.19 |
| **CO₂ (%)** | 13.07 ± 0.00 | 13.54 ± 0.27 | 13.41 ± 0.00 |
| **CO (ppm)** | 13 ± 0 | 21 ± 32 | 14 ± 11 |
| **NO (ppm)** | 344 ± 21 | 113 ± 11 | 118 ± 12 |
| **NO₂ (ppm)** | 14 ± 3 | 76 ± 5 | 11 ± 5 |
| **NOₓ (ppm)** | 358 ± 21 | 189 ± 12 | 128 ± 14 |
| **SO₂ (ppm)** | 2282 ± 38 | 160 ± .16 | 11 ± 3 |

As is evident , a noticeable decrease of NO and SO₂ upon the injection of NaHCO₃ and the increase of NO₂ was realized. The scrubber was very effective at removing SO₂ as its concentration dropped precipitously at the scrubber outlet.

### EXAMPLE 2

This test was done with NaHCO₃ injection in three ports at a flow rate of 5.5 kg/hr and injection temperature of 150°C. The injection period was 1 hour in each port. The scrubber solution was pre-charged with: 1 kg of Na₂CO₃, 29 kg of Na₂SO₄ and 19 kg of Na₂SO₃ dissolved in 187 1 of water. The pH of the prepared solution was about 10.6.

The NaHCO₃ injection started in Port 20c and proceeded to Ports 20b and 20a. After the completion of each injection, the filter of the CEM train downstream of the injection port was immediately changed to ensure accurate readings of the flue gas compositions.

Table 8 summarizes the average flue gas compositions at the combustor exit and scrubber inlet before any NaHCO₃ injection was made.

| **Table 8 - Flue gas compositions before injections** | | |
|---|---|---|
| | **Combustor Exit** | **Scrubber inlet** |
| **O₂ (%)** | 2.07 ± 0.30 | 4.28 ± 0.34 |
| **CO₂ (%)** | 16.17 ± 0.30 | 14.52 ± 0.33 |
| **CO (ppm)** | 10 ± 46 | 21 ± 24 |
| **NOₓ (ppm)** | 515 ± 57 | 321 ± 27 |
| **SO₂ (ppm)** | 2937 ± 86 | 2438 ± 77 |

Injection of NaHCO₃ started at 1237am at Port 20c (0.5 sec residence time), proceeded to Port 20a lasting for 60 min at each port. Table 9 summarizes the flue gas compositions during the injections.

| **Table 9 - Flue gas compositions during injections** | | | |
|---|---|---|---|
| **Port 20c** | | | |
| | Scrubber inlet before injection (diluted by injection air) | Scrubber inlet during injection | Scrubber outlet during injection |
| **O₂ (%)** | 6.18 ± 0.63 | 6.05 ± 0.14 | 6.21 ± 0.16 |
| **CO₂ (%)** | 13.84 ± 0.44 | 13.48 ± 0.26 | 13.41 ± 0.10 |
| **CO (ppm)** | 87 ± 151 | 17 ± 11 | 12 ± 12 |
| **NO (ppm)** | 277 ± 33 | 203 ± 22 | 211 ± 23 |
| **NO₂ (ppm)** | 0 ± 0 | 5 ± 3 | 7 ± 4 |
| **NOₓ (ppm)** | 277 ± 33 | 208 ± 21 | 218 ± 24 |
| **SO₂ (ppm)** | 2208 ± 70 | 159 ± 21 | 11 ± 2 |

| **Port 20b** | | | |
|---|---|---|---|
| | Scrubber inlet before injection (diluted by injection air) | Scrubber inlet during injection | Scrubber outlet during injection |
| **O₂ (%)** | 6.18 ± 0.24 | 6.26 ± 0.13 | 6.49 ± 0.14 |
| **CO₂ (%)** | 12.94 ± 0.28 | 13.23 ± 0.09 | 13.23 ± 0.22 |
| **CO (ppm)** | 30 ± 65 | 10 ± 9 | 6 ± 1 |
| **NO (ppm)** | 280 ± 15 | 150 ± 23 | 181 ± 21 |
| **NO₂ (ppm)** | 4 ± 2 | 45 ± 4 | 1 ± 2 |
| **NOₓ (ppm)** | 284 ± 16 | 195 ± 26 | 183 ± 22 |
| **SO₂ (ppm)** | 2364 ± 68 | Decreasing to 150 | 90 ± 9 |

| **Port 20a** | | | |
|---|---|---|---|
| | Scrubber inlet before injection (diluted by injection air) | Scrubber inlet during injection | Scrubber outlet during injection |
| **O₂ (%)** | 6.37 ± 0.17 | 6.36 ± 0.11 | 6.35 ± 0.16 |
| **CO₂ (%)** | 12.88 ± 0.23 | 12.96 ± 0.20 | 13.45 ± 0.00 |
| **CO (ppm)** | 13 ± 18 | 10 ± 11 | 12 ± 18 |
| **NO (ppm)** | 320 ± 35 | 113 ± 9 | 125 ± 12 |
| **NO₂ (ppm)** | 10 ± 3 | 58 ± 3 | 2 ± 3 |
| **NOₓ (ppm)** | 330 ± 36 | 171 ± 12 | 128 ± 12 |
| **SO₂ (ppm)** | 2303 ± 39 | 326 ± 24 | 18 ± 3 |

From a review of the data noted above, there was a noticeable decrease of NO and SO₂ upon the injection of NaHCO₃ and a significant increase of NO₂ at scrubber inlet at 2 and 3 sec residence time. When the CEM was moved to scrubber outlet at the end of the third injection, it indicated the immediate increase of the concentrations of NO₂ and SO₂ confirming their removal in the scrubber.

### EXAMPLE 3

In the example, NaHCO₃ injection occurred in three ports at a flow rate of 7.7kg/hr and injection temperature of 150°C. The injection period lasted 1 hour in each port. The scrubber solution was pre-charged as 1 kg of Na₂CO₃, 29 kg of Na₂SO₄ and 19 kg of Na₂SO₃ dissolved in 187 1 of water. The pH of the prepared solution was about 10.6.

The NaHCO₃ injection started in Port 20c and proceeded to Port 20a.

Table 10 shows the average injection temperatures for each port.

| **Table 10 - Average injection temperatures (°C)** | | | | | | |
|---|---|---|---|---|---|---|
| | Port 20a | | Port 20b | | Port 20c | |
| | Upstream | Downstream | Upstream | Downstream | Upstream | Downstream |
| Injection temperature | 155±3 | 132±5 | 157±1 | 133±0 | 157±5 | 139±5 |

Table 11 summarizes the average flue gas compositions at the combustor exit and scrubber inlet before any NaHCO₃ injection was made.

| **Table 11 - Flue gas compositions before injections** | | |
|---|---|---|
| | **Combustor Exit** | **Scrubber inlet** |
| **O₂ (%)** | 2.14 ± 0.33 | 4.38 ± 0.19 |
| **CO₂ (%)** | 15.95 ± 0.29 | 14.23 ± 0.45 |
| **CO (ppm)** | 10 ± 85 | 28 ± 5 |
| **NOₓ (ppm)** | 545 ± 114 | 540 ± 25 |
| **SO₂ (ppm)** | 2964 ± 127 | 2672 ± 101 |

Injection of sodium bicarbonate started at 1237am at Port C (0.5 sec residence time), proceeded to Port A lasting for 60 min at each port.

Table 12 summarizes the flue gas compositions during the injections.

| **Table 12 - Flue gas compositions during injections** | | | |
|---|---|---|---|
| **Port 20c** | | | |
| | Scrubber inlet before injection (diluted by injection air) | Scrubber inlet during injection | Scrubber outlet during injection |
| **O₂ (%)** | 5.82 ± 0.38 | 6.05 ± 0.10 | 6.11 ± 0.16 |
| **CO₂ (%)** | 12.89 ± 0.38 | 13.25 ± 0.00 | 13.02 ± 0.17 |
| **CO (ppm)** | 20 ± 1 | 17 ± 1 | 14 ± 1 |
| **NO (ppm)** | 480 ± 54 | 303 ± 28 | 341 ± 19 |
| **NO₂ (ppm)** | 7 ± 5 | 38 ± 4 | 6 ± 2 |
| **NOₓ (ppm)** | 486 ± 61 | 342 ± 34 | 346 ± 20 |
| **SO₂ (ppm)** | 2464 ± 57 | Decreasing to 130 | 12 |

| **Port 20b** | | | |
|---|---|---|---|
| | Scrubber inlet before injection (diluted by injection air) | Scrubber inlet during injection | Scrubber outlet during injection |
| **O₂ (%)** | 5.98 ± 0.22 | 5.85 ± 0.11 | 5.79 ± 0.10 |
| **CO₂ (%)** | 13.05 ± 0.22 | 13.45 ± 0.16 | 13.22 ± 0.00 |
| **CO (ppm)** | 15 ± 2 | 17 ± 36 | 15 ± 15 |
| **NO (ppm)** | 457 ± 7 | 275 ± 20 | 286 ± 19 |
| **NO₂ (ppm)** | 22 ± 3 | 58 ± 7 | 4 ± 1 |
| **NOₓ (ppm)** | 479 ± 7 | 333 ± 23 | 290 ± 19 |
| **SO₂ (ppm)** | 2303 ± 58 | 300 - 400 | 10 ± 1 |

| **Port 20a** | | | |
|---|---|---|---|
| | Scrubber inlet before injection (diluted by injection air) | Scrubber inlet during injection | Scrubber outlet during injection |
| **O₂ (%)** | 5.67 ± 0.32 | 5.86 ± 0.08 | 5.74 ± 0.12 |
| **CO₂ (%)** | 13.23 ± 0.27 | 13.36 ± 0.03 | 13.31 ± 0.15 |
| **CO (ppm)** | 25 ± 25 | 11 ± 3 | 13 ± 8 |
| **NO (ppm)** | 510 ± 12 | 224 ± 13 | 202 ± 8 |
| **NO₂ (ppm)** | 26 ± 6 | 88 ± 3 | 3 ± 2 |
| **NOₓ (ppm)** | 536 ± 11 | 312 ± 14 | 206 ± 7 |
| **SO₂ (ppm)** | 2303 ± 39 | 218 ± 16 | 8 ± 1 |

There was a decrease of NO and SO₂ upon the injection of NaHCO₃ and a pronounced increase of NO₂ at the scrubber inlet at all 3 residence times tested. Accordingly, at this injection rate (7.7 kg/hr), the accumulation of NaHCO₃ powder on the CEM filter was quite rapid. During the third injection at Port 20a, the CEM was first located at the scrubber outlet and moved to the scrubber inlet at the end of the injection in order to obtain a more reliable SO₂ reading.

The last 3 tests all showed that, upon injection of NaHCO₃ in the flue stream, concentrations of SO₂ and NO decreased immediately, while NO₂ concentration increased. Once the injection was stopped, the concentrations of SO₂ and NO rapidly returned to the pre-injection levels. The NaHCO₃ injection did not have any effect on the concentrations of the other monitored species (O₂, CO₂ and CO).

For all three tests, the scrubber solution was pre-charged according to 1 kg of Na₂CO₃, 29 kg of Na₂SO₄ and 19 kg of Na₂SO₃ dissolved in 187 1 of water. The pH of the prepared solution was about 10.6. When the scrubbing started, the pH value decreased slowly as sulfur was dissolved in the solution. However, when the NaHCO₃ injection started, the pH value of the scrubbing solution stayed steady at about 7.5.

From Table 13, it can be seen that the scrubber was very effective in removing NO₂ produced in the flue stream after the injection of NaHCO₃. The scrubber was also very effective at removing SO₂.

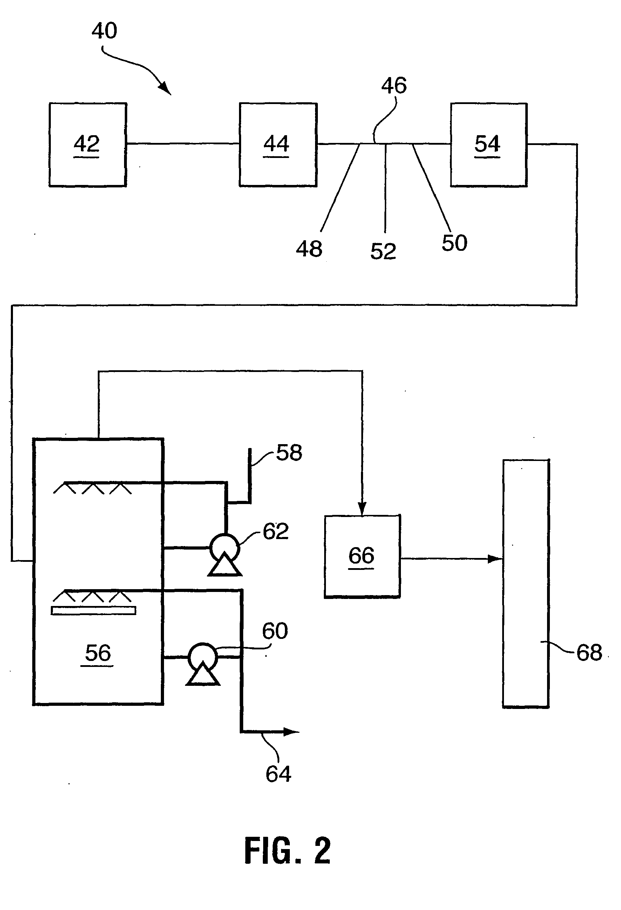

Having described the test facility and the data collected, in connection with establishing the effectiveness of the injection and scrubbing operations, reference will now be made to Figure 2 which schematically illustrates one embodiment of a plant design. The overall plant design is referenced by numeral 40 with the combustion system from, for example, a power station being referenced by numeral 42. The combustion products are first treated in an electrostatic precipitator or baghouse 44 and subsequently discharged through a flue gas duct 46. In an attempt to further increase the efficiency of the overall system, oxidant material may be injected into the flue gas duct at any number of locations such as at or approximate the inlet 48 or approximate the outlet 50. At this oxidation step, is useful to convert uncaptured NO and NO₂ to be converted to NO₂, N₂O₃, N₂O₅ and NₓO_{y} inter alia. The oxidation steps 48 and 50 are augmented by the injection step with sodium bicarbonate, the injection being broadly denoted by numeral 52. Although the sodium bicarbonate injection step is preferentially a dry injection step, it will be clearly understood by those skilled in the art that the injection step can also be wet with essentially any alkali compound and at any of several locations from the flue gas duct to the wet scrubber to be discussed hereinafter.

Suitable oxidants will be appreciated by those skilled, however, examples include hydrogen peroxide, ozone, sodium chlorate or compounds (NaClOₓ where x is 1 through 4) or any combination of these materials. Once having been treated with a dry injection step, the flue gas stream now partially devoid of NOₓ compounds is treated in a wet to dry transition device 54 and then subsequently on to the wet scrubbing operation in wet scrubber 56. Any suitable scrubber 56 may be incorporated and will be essentially the choice of the designer based on the requirements of the overall circuit. Typical manufactures of wet scrubbers include The Babcock and Wilcox Company, Marsulex, Kawaski Heavy Industries, Mitsui, Chiyoda, Thyssen KEA, *inter alia*. Numerals 58 and 60 denote further possible oxidant injection points where the aqueous solution of the oxidant is recirculated into the scrubber 56. A suitable pump 62 may be included with each circulation loop of the oxidant. These steps are optional, since it has been indicated herein previously that the oxidant can be introduced at any point from the flue gas duct to the wet scrubber and still function to achieve the goal of oxidizing any compounds present. The solution from scrubber 56, broadly denoted by numeral 64 may be removed from time to time for processing.

As a further optional step, a wet electrostatic precipitator may be introduced into the circuit, the former being represented by numeral 66.where the gas stream is passed through the electrostatic precipitator to polish the flue gas of any further particulate, fine particulates, water droplets or aerosols from the stream. This is an optional step and is not essential to the process. Once through the ESP 66, the flue gas can then be discharged through the stack 68. The wet esp 66 may or may not be an extension to the wet scrubber 56. An alternative, shown in dashed lines is illustrated in Figure 2.

In terms of the overall reactions that occur in the process, the reactions that occur in the dry injection phase are simply those that involve the sodium bicarbonate contacting the SOₓ and NOₓ compounds. Exemplary of the actions of the SOₓ chemistry that occur in the injection apparatus include the following:

NaHCO₃ ⇔ Na₂CO₃ + CO₂ (g) + H₂O (g) 1)

2*NaHCO₃ + SO₂(g) ⇔ Na₂SO₃ + 2*CO₂ (g) + H₂O (g) 2)

2*NaHCO₃ + SO₃ (g) ⇔ Na₂SO₄ + 2*CO₂(g) + H₂O (g) 3)

Na₂CO₃ + SO₂(g) ⇔ Na₂SO₃ + CO₂ (g) 4)

Na₂CO₃ + SO₃ (g) ⇔ Na₂SO₄ + CO₂(g) 5)

2*NaNO₃ + SO₂ (g) ⇔ Na₂SO₄ + 2*NO₂ (g) 6)

2*NaNO₂ + SO₂ (g) ⇔ Na₂SO₄ + 2*NO (g) 7)

2*NaNO₂ + SO₂ (g) + O₂ (g) ⇔ Na₂SO₄ + 2*NO₂ (g) 8)

SO₂ (g) + H₂O ⇔ HSO₃ + H 9)

In addition to the SOₓ reactions there are additionally NOₓ reactions occurring in the injection phase which include the following:

Na₂SO₃ + 2* NO₂ (g) + O₂ (g) ⇔ 2*NaNO₃ + SO₃ (g) 1)

Na₂SO₃ + 2* NO(g) + 2*O₂(g) ⇔ 2*NaNO₃ + SO₃ (g) 2)

Na₂SO₃ + 2* NO (g) + O₂ (g) ⇔ 2*NaNO₂ + SO₃ (g) 3)

Na₂CO₃ + 2*NO₂ (g) + O₂ (g) ⇔ 2*NaNO₃ + NO (g) + CO₂ (g) 4)

2*NO (g) + O₂ (g) ⇔ 2*NO₂ (g) 5)

NO (g) + NO₂ (g) ⇔ N₂O₃ (g) 6)

2* NO₂ (g) ⇔ N₂O₄ (g) 7)

N₂O₃ (g) + H₂O ⇔ 2*HNO₂ 8)

N₂O₃ (g) + 2*NaOH ⇔ 2*NaNO₂ + H₂O 9)

2 NO₂ (g) + H₂O ⇔ HNO₂ + HNO₃ 10)

2* NO₂ (g) + 2*NaOH ⇔ NaNO₂ + NaNO₃ + H₂O 11)

3* NO₂ (g) + H₂O ⇔ NO(g) + 2*HNO₃ 12)

3* NO₂(g) ⇔ N₂O₅ (g) + NO (g) 13)

NaNO₂ + NO₂ (g) ⇔ NO (g) + NaNO₃ 14)

N₂O₄ (g) + H₂O ⇔ HNO₂ + HNO₃ 15)

3*HNO₂ ⇔ 2*NO (g) + H₂O +HNO₃ 16)

N₂O₅ (g) + H₂O ⇔ 2*HNO₃ 17)

HNO₃ + NaOH ⇔ NaNO₃ + H₂O 18)

In terms of the reactions that occur in the wet scrubber, many of the NOₓ reactions indicated above occur in the wet scrubbing phase as well as the following acid gas reactions:

2*HCl + Na₂CO₃ ⇔ 2*NaCl + CO₂ + H₂O 1)

2*HF + Na₂CO₃ ⇔ 2*NaF + CO₂ + H₂O 2)

H₂S + 2*O₂ ⇔ H₂SO₄ ⇔OH + HSO₃ 3)

Na₂S + 2* O₂ ⇔ 2*Na₂SO₄ 4)

8*NO(g) + Na₂S ⇔ NaSO₃(NO)₂ + 3*N₂O 5)

NaSO₃(NO)₂ + 3*N₂O ⇔ NaSO₄ + 4*N₂O 6)

H₂SO₄ + Na₂CO₃ ⇔ Na₂SO₄ + CO₂ + H₂O 7)

As discussed herein previously, the oxidant loops where oxidant is injected into the wet scrubber by points 58 and 60. Typical of the reactions that will occur from an oxidation point of view include the following:

O(g) + O₂ (g) ⇔ O₃ (g) 1)

NO (g) + O₃ (g) ⇔ NO₂ (g) + O₂ (g) 2)

2*NO(g) + O₃(g) ⇔ N₂O₅ (g) 3)

2*NO (g) + O₂(g) ⇔ 2*NO₂ (g) 4)

2*NO₂(g) + O₃ (g) + H₂O ⇔ 2*HNO₃ (g) + O₂ (g) 5)

NO (g) + NaClO ⇔ NaCl + NO₂ (g) 6)

H₂S + 4*NaClO ⇔ 4*NaCl + H₂SO₄ 7)

H₂S + H₂O₂ ⇔ S + 2*H₂O 9)

4*NO(g) + 3*NaClO₂ + 4*NaOH ⇔ 4*NaNO₃ + 3*NaCl + 2*H₂O 9)

4*NO₂ (g) + NaClO₂ + 4*NaOH ⇔ 4*NaNO₃ + NaCl + 2*H₂O 10)

2*Na₂SO₃ + NaClO₂ ⇔ 2*Na₂SO₄ + NaCl 11)

3*H₂O₂ + 2*NO(g) ⇔ HNO₃ + 2*H₂O 12)

H₂O₂ + HNO₂ ⇔ HNO₃ + H₂O 13)

As a particular convenience, the dry injection scrubbing operation as well as the wet scrubbing operation are particularly useful in reducing other air toxic compounds present in the flue gas.

Based on the Environmental Protection Agency in the United States, the listed air toxic compounds include the following:
Acetaldehyde
Acetamide
Acetonitrile
Acetophenone
2-Acetylaminofluorene
Acrolein
Acrylamide
Acrylic acid
Acrylonitrile
Allyl chloride
4-Aminobiphenyl
Aniline
o-Anisidine
Asbestos
Benzene (including benzene from gasoline)
Benzidine
Benzotrichloride
Benzyl chloride
Biphenyl
Bis(2-ethylhexyl)phthalate (DEHP)
Bis(chloromethyl) ether
Bromoform
1,3-Butadiene
Calcium cyanamide
Captan
Carbaryl
Carbon disulfide
Carbon tetrachloride
Carbonyl sulfide
Catechol
Chloramben
Chlordane
Chlorine
Chloroacetic acid
2-Chloroacetophenone
Chlorobenzene
Chlorobenzilate
Chloroform
Chloromethyl methyl ether
Chloroprene
Cresol/Cresylic acid (mixed isomers)
o-Cresol
m-Cresol
p-Cresol
Cumene
2,4-D, salts and esters (2,4-Dichlorophenoxyacetic Acid)
DDE (1,1-dichloro-2,2-bis(p-chlorophenyl) ethylene)
Diazomethane
Dibenzofuran
1,2-Dibromo-3-chloropropane
Dibutyl phthalate
1,4-Dichlorobenzene
3,3'-Dichlorobenzidine
Dichloroethyl ether (Bis[2-chloroethyl]ether)
1,3-Dichloropropene
Dichlorvos
Diethanolamine
Diethyl sulfate
3,3'-Dimethoxybenzidine
4-Dimethylaminoazobenzene
N,N-Dimethylaniline
3,3'-Dimethylbenzidine
Dimethylcarbamoyl chloride
N,N-Dimethylformamide
1,1-Dimethylhydrazine
Dimethyl phthalate
Dimethyl sulfate
4,6-Dinitro-o-cresol (including salts)
2,4-Dinitrophenol
2,4-Dinitrotoluene
1,4-Dioxane (1,4-Diethyleneoxide)
1,2-Diphenylhydrazine
Epichlorohydrin (1-Chloro-2,3-epoxypropane)
1,2-Epoxybutane
Ethyl acrylate
Ethylbenzene
Ethyl carbamate (Urethane)
Ethyl chloride (Chloroethane)
Ethylene dibromide (Dibromoethane)
Ethylene dichloride(1,2-Dichloroethane)
Ethylene glycol
Ethyleneimine (Aziridine)
Ethylene oxide
Ethylene thiourea
Ethylidene dichloride (1,1-Dichloroethane)
Formaldehyde
Heptachlor
Hexachlorobenzene
Hexachlorobutadiene
1,2,3,4,5,6-Hexachlorocyclohexane (all stereo isomers, including lindane)
Hexachlorocyclopentadiene Hexachloroethane
Hexamethylene diisocyanate Hexamethylphosphoramide
Hexane
Hydrazine
Hydrochloric acid (Hydrogen Chloride)
Hydrogen fluoride (Hydrofluoric acid)
Hydroquinone
Isophorone
Maleic anhydride
Methanol
Methoxychlor
Methyl bromide (Bromomethane)
Methyl chloride (Chloromethane)
Methyl chloroform (1,1,1-Trichloroethane)
Methyl ethyl ketone (2-Butanone)
Methylhydrazine
Methyl iodide (Iodomethane)
Methyl isobutyl ketone (Hexone)
Methyl isocyanate
Methyl methacrylate
Methyl tert-butyl ether
4,4'-Methylenebis(2-chloroaniline)
Methylene chloride (Dichloromethane)
4,4'-Methylenediphenyl diisocyanate (MDI)
4,4'-Methylenedianiline
Naphthalene
Nitrobenzene
4-Nitrobiphenyl
4-Nitrophenol
2-Nitropropane
N-Nitroso-N-methylurea
N-Nitrosodimethylamine
N-Nitrosomorpholine
Parathion
Pentachloronitrobenzene (Quintobenzene)
Pentahlorophenol
Phenol
p-Phenylenediamine
Phosgene
Phosphine
Phosphorus
Phthalic anhydride
Polychlorinated biphenyls (Aroclors)
1,3-Propane sultone
beta-Propiolactone
Propionaldehyde
Propoxur (Baygon)
Propylene dichloride (1,2-Dichloropropane)
Propylene oxide
1,2-Propylenimine (2-Methylaziridine)
Quinoline
Quinone (p-Benzoquinone)
Styrene
Styrene oxide
2,3,7,8-Tetrachlorodibenzo-p-dioxin
1,1,2,2-Tetrachloroethane
Tetrachloroethylene (Perchloroethylene)
Titanium tetrachloride
Toluene
Toluene-2,4-diamine
2,4-Toluene diisocyanate
o-Toluidine
Toxaphene (chlorinated camphene)
1,2,4-Trichlorobenzene
1,1,2-Trichloroethane
Trichloroethylene
2,4,5-Trichlorophenol
2,4,6-Trichlorophenol
Triethylamine
Trifluralin
2,2,4-Trimethylpentane
Vinyl acetate
Vinyl bromide
Vinyl chloride
Vinylidene chloride (1,1-Dichloroethylene)
Xylenes (mixed isomers)
o-Xylene
m-Xylene
p-Xylene
Antimony Compounds
Arsenic Compounds (inorganic including arsine)
Beryllium Compounds
Cadmium Compounds
Chromium Compounds
Cobalt Compounds
Coke Oven Emissions
Cyanide Compounds
Glycol ethers
Lead Compounds
Manganese Compounds
Mercury Compounds
Fine mineral fibers
Nickel Compounds
Polycyclic Organic Matter
Radionuclides (including radon)
Selenium Compounds

In conclusion, by combining dry injection and wet scrubbing operations, the concentrations of SO₂ and NOₓ were reduced immediately primarily due to their respective chemical reactions with NaHCO₃. Other sorbents clearly will also provide effectiveness, namely sodium carbonate, sodium hydroxide, or any combination of these.

Reference to U.S. Patent Nos. 6,143,263 and 6,303,083 may be made for other examples in SOₓ removal.

The scrubber proved very effective at removing NO₂ which can account for a significant portion of the overall NOₓ; the scrubber was also effective in removing sulfuric compounds resulting in near zero SO₂ emission.

## Claims

1. A method of scrubbing SOₓ and NOₓ compounds from a flue gas stream, **characterized in that** the method comprises:
a dry injection scrubbing operation, a wet scrubbing operation and an oxidation operation,
said dry injection scrubbing operation including:
contacting a flue gas stream containing SOₓ and NOₓ compounds with a sorbent selected from the group consisting of sodium bicarbonate, sodium carbonate, sodium hydroxide, and combinations thereof, for removing substantially all of the SOₓ and a large amount of NOₓ compounds present in said stream;
said wet scrubbing operation including:
scrubbing said stream from said dry injection scrubbing operation; and
said oxidation operation including:
adding an oxidant to said stream subsequent to said wet scrubbing operation,
the wet scrubbing operation and the oxidation operation removing any residual SOₓ and NOₓ compounds remaining in said stream.

2. The method as claimed in claim 1, wherein said oxidant is selected from the group consisting of hydrogen peroxide, ozone, NaClOₓ, where x is 1 through 4, or a combination thereof.

3. The method as claimed in claim 1, further including the step of recirculating unreacted sorbent to said wet scrubbing operation.

4. The method as claimed in claim 1, wherein said stream from said dry injection scrubbing process produces sodium sulfate, sodium sulfite, sodium fluoride, sodium chloride, sodium nitrite, sodium carbonate and/or sodium nitrate.

## Patentansprüche

1. Verfahren zum Auswaschen von SOₓ- und NOₓ-Verbindungen aus einem Rauchgasstrom, **dadurch gekennzeichnet, dass** das Verfahren umfasst:
einen Trockeninjektionswaschprozess, einen Nasswaschprozess und
einen Oxidationsprozess,
wobei der Trockeninjektionswaschprozess einschließt:
das In-Kontakt-bringen eines Rauchgasstroms, der SOₓ- und NOₓ-Verbindungen enthält, mit einem Sorbens, das aus der Gruppe ausgewählt ist, welche Natriumbicarbonat, Natriumcarbonat,
Natriumhydroxid sowie Kombinationen von diesen umfasst, zum Entfernen von im Wesentlichen der gesamten SOₓ- und einer großen Menge der NOₓ-Verbindungen, die in dem Strom vorhanden sind;
wobei der Nasswaschprozess einschließt:
das Waschen des Stroms, der aus dem Trockeninjektionswaschprozess kommt; und
wobei der Oxidationsprozess einschließt:
das Hinzufügen eines Oxidans zu dem Strom im Anschluss an den Nasswaschprozess,
wobei durch den Nasswaschprozess und den Oxidationsprozess sämtliche noch in dem Strom vorhandenden SOₓ- und NOₓ-Rest-verbindungen entfernt werden.

2. Verfahren gemäß Anspruch 1, wobei das Oxidans aus der Gruppe ausgewählt ist, welche Wasserstoffperoxid, Ozon, NaClOₓ, wobei x 1 bis 4 ist, oder eine Kombination von diesen umfasst.

3. Verfahren gemäß Anspruch 1, des Weiteren umfassend den Schritt des Rezirkulierens von nichtumgesetztem Sorbens in den Nasswaschprozess.

4. Verfahren gemäß Anspruch 1, wobei der aus dem Trockeninjektionswaschprozess kommende Strom Natriumsulfat, Natriumsulfit, Natriumfluorid, Natriumchlorid, Natriumnitrit, Natriumcarbonat und/oder Natriumnitrat erzeugt.

## Revendications

1. Un procédé pour laver les composés SOₓ et NOₓ d'un flux de gaz brûlés, **caractérisé en ce que** le procédé comporte :
une opération de lavage par injection à sec, une opération de lavage hydraulique et une opération d'oxydation,
ladite opération de lavage par injection à sec comprenant l'étape visant à :
faire entrer en contact avec un flux de gaz brûlés contenant des composés SOₓ et NOₓ un sorbant sélectionné dans le groupe constitué de bicarbonate de sodium, carbonate de sodium, hydroxyde de sodium, et de combinaisons de ces derniers, pour enlever substantiellement tous les composés SOₓ et une grande partie des composés NOₓ présents dans ledit flux ;
ladite opération de lavage hydraulique comprenant l'étape visant à :
laver ledit flux de ladite opération de lavage par injection à sec ; et
ladite opération d'oxydation comprenant l'étape visant à :
ajouter un oxydant audit flux suite à ladite opération de lavage hydraulique, l'opération de lavage hydraulique et l'opération d'oxydation enlevant tous les composés SOₓ et NOₓ restant dans ledit flux.

2. Le procédé tel que revendiqué dans la revendication 1, où ledit oxydant est sélectionné dans le groupe constitué de peroxyde d'hydrogène, ozone, NaCIOₓ, où x va de 1 à 4, ou une combinaison de ces derniers.

3. Le procédé tel que revendiqué dans la revendication 1, comprenant de plus l'étape visant à faire recirculer le sorbant qui n'a pas réagi à ladite opération de lavage hydraulique.

4. Le procédé tel que revendiqué dans la revendication 1, où ledit flux dudit processus de lavage par injection à sec produit du sulfate de sodium, du sulfite de sodium, du fluorure de sodium, du chlorure de sodium, du nitrite de sodium, du carbonate de sodium et/ou du nitrate de sodium.
